# EUROPEAN PATENT APPLICATION

(11) **EP 2 579 362 A1**
(43) Date of publication of application: **10.04.2013**
(21) Application number: 11786563.4
(22) Date of filing: 20.05.2011
(51) Int. Cl.: H01M 4/02, H01M 4/62, H01M 10/39

(54) **MOLTEN SALT BATTERY**

(30) Priority: 24.05.2010 JP 2010118457
(71) Applicant: Sumitomo Electric Industries, Ltd., Chuo-ku Osaka-shi Osaka 541-0041 (JP)
(72) Inventor: FUKUNAGA, Atsushi, Osaka-shi Osaka 554-0024 (JP); SAKAI, Shoichiro, Osaka-shi Osaka 554-0024 (JP); HIRAIWA, Chihiro, Osaka-shi Osaka 554-0024 (JP); NITTA, Koji, Osaka-shi Osaka 554-0024 (JP); MAJIMA, Masatoshi, Osaka-shi Osaka 554-0024 (JP); INAZAWA, Shinji, Osaka-shi Osaka 554-0024 (JP)
(74) Representative: Setna, Rohan P.
(86) International application number: PCT/JP2011/061610
(87) International publication number: WO 2011/148864

(57) **Abstract**

To provide a molten salt battery which is highly safe and has long charge/discharge cycle life. The molten salt battery of the present invention includes a negative electrode 1 in which a negative electrode active material 12 is predominantly composed of carbon such as hard carbon. The negative electrode active material 12 is surface-treated for imparting hydrophilicity to the negative electrode active material 12 to improve the affinity for the molten salt. Further, a transition metal such as iron is added to the negative electrode active material 12 predominantly composed of hard carbon in order to enhance the affinity for the active material. The molten salt battery has higher safety in production and use and longer charge/discharge cycle life than conventional molten salt batteries using metallic sodium as an electrode.

## Description

### TECHNICAL FIELD

The present invention relates to a molten salt battery using a molten salt for an electrolyte.

### BACKGROUND ART

In recent years, the use of natural energies of sunlight, wind power, and others has been advanced. When electric power is generated by use of a natural energy, the electric power generation amount is easily varied because of a change in natural conditions, such as weather, and further the electric power generation amount is not easily adjusted in accordance with electric power demand. Accordingly, in order to supply the electric power generated by use of a natural energy, it is necessary to level the supply power by charging and discharging through the use of a storage battery. For this reason, in order to attain further promotion of the use of natural energies, storage batteries high in energy density and efficiency are indispensable. As such storage batteries, molten salt batteries are being developed. The molten salt battery is a battery in which a molten salt is used for the electrolyte, and operates at a temperature higher than room temperature, at which the molten salt is actually molten. The molten salt battery includes a battery using sodium for the active material, and such a battery includes a battery using metallic sodium as the negative electrode.

### CITATION LIST

### PATENT LITERATURE

Patent Literature 1: Japanese Unexamined Patent Publication No. 10-312791

### SUMMARY OF INVENTION

### (TECHNICAL PROBLEM)

When metallic sodium is used for the negative electrode of the molten salt battery, the capacity density increases, but safety of the molten salt battery is deteriorated since the metallic sodium has high reactivity. Further, this molten salt battery has a problem that the charge/discharge cycle life is short due to the dendrites growing in charging and discharging. The negative electrode which enhances the safety of a battery and makes the charge/discharge cycle life relatively long includes a carbon electrode. In Patent Literature 1 is disclosed a lithium ion battery including a carbon electrode. However, in the lithium ion battery, the electrolytic solution is a hydrophobic organic solvent, whereas in the molten salt battery, the electrolyte is a molten salt and the battery operates at higher temperatures than room temperature at which the lithium ion battery operates. As described above, service conditions of the electrode are different between the lithium ion battery and the molten salt battery, and it is not clear whether a carbon electrode similar to that of the lithium ion battery can be used in the molten salt battery or not.

The present invention was made in view of these circumstances, and it is an object of the present invention to provide a molten salt battery which is highly safe and has long charge/discharge cycle life by using a carbon electrode suitable for a molten salt battery.

### (SOLUTION TO PROBLEM)

A molten salt battery of the present invention is a molten salt battery using a molten salt as an electrolyte, and is characterized in that the molten salt battery includes an electrode predominantly composed of carbon, and the electrode is surface-treated for improving the affinity for the molten salt.

In the present invention, since the molten salt battery includes an electrode predominantly composed of carbon, the molten salt battery has higher safety, and dendrites are hardly produced in charging and discharging. Further, by surface-treating the electrode for improving the affinity for the molten salt, it becomes easy to absorb ions through the molten salt of an electrolyte into the electrode.

The molten salt battery of the present invention is characterized in that a hydrophilic resin is applied onto the surface of the electrode as the surface treatment.

In the present invention, by applying a hydrophilic resin onto the surface of the electrode predominantly composed of carbon, the affinity of the electrode for a molten salt of an electrolyte is improved.

The molten salt battery of the present invention is characterized in that the surface of the electrode is irradiated with an electron beam as the surface treatment.

In the present invention, by irradiating the surface of the electrode predominantly composed of carbon with an electron beam, a hydrophilic group is exposed to the surface of the electrode and the affinity of a molten salt of an electrolyte for the electrode is improved.

The molten salt battery of the present invention is characterized in that carbon as a main component of the electrode is hard carbon.

In the present invention, since the molten salt battery includes an electrode predominantly composed of hard carbon, the molten salt battery has a larger capacity and a smaller change in an electrode size during charging and discharging than in the case where graphite is used for the carbon material.

The molten salt battery of the present invention is characterized in that a transition metal is added to the electrode.

In the present invention, by adding a transition metal such as iron to the electrode predominantly composed of hard carbon, the affinity of the electrode for metal ions is enhanced and the occurrence of self-discharge at the electrode is reduced.

### (ADVANTAGEOUS EFFECTS OF INVENTION)

In the present invention, the molten salt battery including an electrode predominantly composed of carbon exerts excellent effects in that it has higher safety in production and use and longer charge/discharge cycle life than conventional molten salt batteries using metallic sodium as an electrode.

### BRIEF DESCRIPTION OF DRAWINGS

FIG. 1 is a schematic sectional view showing an example of a configuration of a molten salt battery of the present invention.
FIG. 2 is a schematic characteristic chart showing a voltage characteristic at the charging and discharging of the molten salt battery of Embodiment 1.
FIG. 3 is a characteristic chart showing the results of the experiment of charging and discharging using a negative electrode in which hard carbon is used as a main component of the negative electrode active material.
FIG. 4 is a characteristic chart showing changes in a capacity maintenance factor, obtained in an experiment.
FIG. 5 is a characteristic chart showing changes in Coulombic efficiency, obtained in an experiment.
FIG. 6 is a schematic view showing an example of a structure of hard carbon.
FIG. 7 is a schematic characteristic chart showing a voltage characteristic at the charging and discharging of the molten salt battery of Embodiment 2.

### DESCRIPTION OF EMBODIMENTS

Hereinafter, the present invention will be specifically described, based on drawings illustrating embodiments of the invention.

### (Embodiment 1)

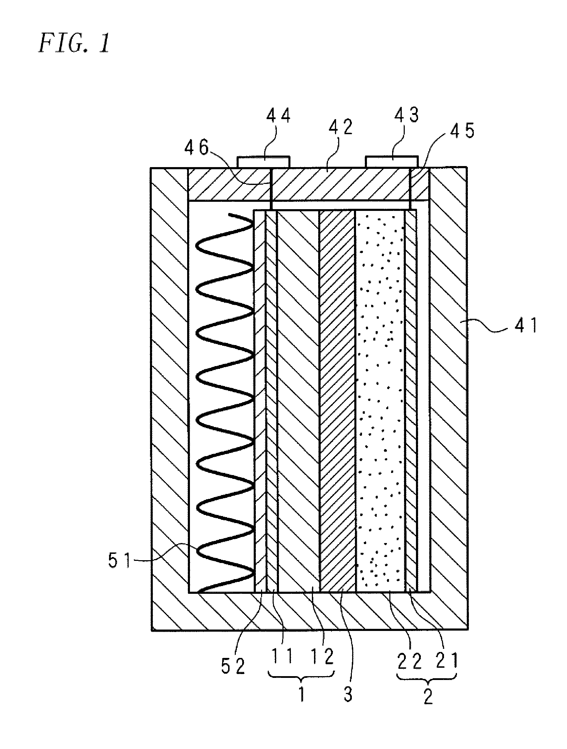

FIG. 1 is a schematic sectional view showing an example of a configuration of a molten salt battery of the present invention. A schematic vertical longitudinal sectional view of the molten salt battery is shown in FIG. 1. The molten salt battery is configured by arranging a positive electrode 2, a separator 3 and a negative electrode 1, which are laminated in a box-shaped battery case 41 opened at the top side, and capping the battery case 41 with a lid section 42. The positive electrode 2 and the negative electrode 1 are formed into a flat rectangular plate shape and the separator 3 is formed into a sheet. The separator 3 is interposed between the positive electrode 2 and the negative electrode 1. The positive electrode 2, the separator 3 and the negative electrode 1 are stacked and placed perpendicularly to the bottom face of the battery case 41.

A spring 51 made of corrugated metal is disposed between the negative electrode 1 and an inner wall of the battery case 41. The spring 51 biases a flat inflexible holding plate 52 made of an Al alloy to press the negative electrode 1 against the separator 3 and the positive electrode 2. The positive electrode 2 is pressed against the separator 3 and the negative electrode 1 by the inner wall opposite to the spring 51 by counteraction of the spring 51. The spring 51 is not limited to a metallic spring, and may be an elastic body such as rubber. When the positive electrode 2 or the negative electrode 1 is expanded or shrunk due to charging and discharging, the change in volume of the positive electrode 2 or the negative electrode 1 is absorbed by expansion and shrinkage of the spring 51.

The positive electrode 2 is formed by applying a positive electrode material 22 containing a positive electrode active material such as NaCrO₂ and a binder onto a rectangular plate-shaped current collector of positive electrode 21 made of aluminum. The positive electrode active material is not limited to NaCrO₂. The current collector of positive electrode 21 is not limited to aluminum, and for example, stainless steel or nickel may be used. The separator 3 is configured in such a way that the electrolyte can be retained therein by use of an insulating material such as glass cloth. The separator 3 is impregnated with the molten salt of an electrolyte. In the present embodiment, as the electrolyte, a molten salt composed of a FSA (bis(fluorosulfonyl)amide; (FSO₂)₂N⁻)- or TFSA (bis(trifluoromethylsulfonyl)amide; (CF₃SO₂)₂N⁻)-based anion and a cation of sodium and/or potassium is used. The molten salt battery may have a form of using another molten salt as the electrolyte. The molten salt becomes an electrolytic solution containing sodium ions from the positive electrode 2 in the range of temperatures at which the molten salt is actually molten. That is, the molten salt battery of the present invention is a molten salt battery using a molten salt containing sodium ions as an electrolytic solution.

The negative electrode 1 is formed by applying a negative electrode active material 12 obtained by mixing graphite and a binder such as PTFE (polytetrafluoroethylene) or PVDF (polyvinylidene difluoride) onto a rectangular plate-shaped negative electrode current collector 11 made of aluminum or nickel. Graphite is a carbon material having a regular structure consisting of a graphite structure. The blend ratio of graphite to the binder is, for example, 9 : 1, at which the negative electrode active material 12 is predominantly composed of graphite. The thickness of the negative electrode active material 12 is 50 µm to 1 mm in order to secure a sufficient capacity of the molten salt battery. The surface of the negative electrode 1, as described later, is subjected to a surface treatment in order to improve the affinity of a molten salt of an electrolytic solution for the negative electrode 1.

After producing the negative electrode 1, the positive electrode material 22 of the positive electrode 2 and the negative electrode active material 12 of the negative electrode 1 are opposed to each other, the positive electrode 2, and the separator 3 and the negative electrode 1 are arranged in the battery case 41 with the separator 3 interposed between the positive electrode 2 and the negative electrode 1. The inside of the battery case 41 is insulated by, for example, covering the inside with an insulating resin in order to prevent short circuit between the positive electrode 2 and negative electrode 1. A positive electrode terminal 43 and a negative electrode terminal 44 are respectively disposed on the outside of the lid section 42 for connecting to the outside. The positive electrode terminal 43 is insulated from the negative electrode terminal 44, and a part of the lid section 42 opposite to the inside of the battery case 41 is insulated with an insulating film or the like. One end of the current collector of positive electrode 21 is connected to the positive electrode terminal 43 through a lead wire 45, and one end of the negative electrode current collector 11 is connected to the negative electrode terminal 44 through a lead wire 46. The lead wire 45 and the lead wire 46 are insulated from the lid section 42. The lid section 42 is capped to the battery case 41 by welding.

It became apparent from the experiment that the negative electrode 1 can absorb sodium ions contained in the molten salt of an electrolyte, and the molten salt battery including the negative electrode 1 is practically capable of charging and discharging. In the molten salt battery, a Na ion is extracted from the positive electrode 2, moved to the negative electrode 1 through the electrolyte, and absorbed into the negative electrode active material 12 during charging. When the affinity of the negative electrode active material 12 for the molten salt of an electrolyte is low, transfer of the sodium ions from the electrolyte to the negative electrode active material 12 becomes difficult and charging becomes insufficient. Thus, the negative electrode active material 12 of the negative electrode 1 needs to be surface-treated for imparting hydrophilicity to the negative electrode active material 12 to improve the affinity for the molten salt. Specifically, a hydrophilic resin such as PVA (polyvinyl alcohol) is applied onto the surface of the negative electrode active material 12 formed on the negative electrode current collector 11. Since the hydrophilic resin such as PVA has a hydrophilic group and is a highly hydrophilic substance, by applying a hydrophilic resin onto the surface of the negative electrode active material 12, hydrophilicity is imparted to the negative electrode active material 12. By imparting the hydrophilicity to the negative electrode active material 12, the affinity of the negative electrode active material 12 for the molten salt is improved. Therefore, the surface-treated negative electrode active material 12 becomes easy to absorb sodium ions, and in the molten salt battery including the negative electrode 1, adequate charging becomes possible. As a surface treatment for improving the affinity for the molten salt, the surface of the negative electrode active material 12 formed on the negative electrode current collector 11 may be irradiated with an electron beam. By irradiating the surface of the negative electrode active material 12 with an electron beam, a hydrophilic group such as a carboxyl group is exposed to the surface of the negative electrode active material 12, the hydrophilicity is imparted to the negative electrode active material 12, and the affinity of the negative electrode active material 12 for the molten salt is improved.

The molten salt battery functions as a secondary battery in which the battery case 41 serves as a positive electrode terminal and the lid section 42 serves as a negative electrode terminal in a temperature range in which the molten salt of an electrolyte is molten. In the present embodiment, the molten salt battery operates at 80°C or more. The configuration of the molten salt battery shown in FIG. 1 is a schematic configuration, and the molten salt battery may include other constituents (not shown) such as a heater for heating the inside or a temperature sensor.

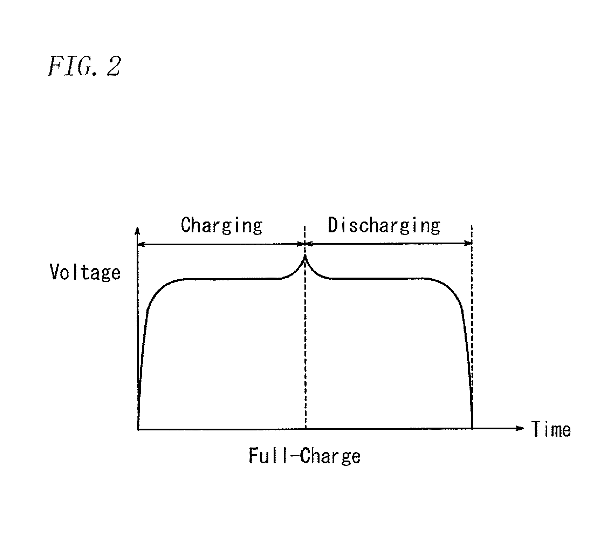

FIG. 2 is a schematic characteristic chart showing a voltage characteristic at the charging and discharging of the molten salt battery of Embodiment 1. A voltage characteristic in the case where the molten salt battery is charged from a non-charged state and discharged from the fully charged time point is shown in FIG. 2. In FIG. 2, the horizontal axis indicates the time elapsed from the start of charging and the vertical axis indicates the voltage generated between the positive electrode 2 and the negative electrode 1 at each time point. In charging, the voltage rapidly increases immediately after the start of charging, and then becomes almost constant up to full-charge. In discharging, the voltage is kept at an almost constant level and rapidly decreases immediately before the completion of discharge. Accordingly, it is possible to obtain a stable voltage output from the molten salt battery of the present embodiment.

Since the molten salt battery of the present embodiment includes the negative electrode 1 predominantly composed of graphite, it has higher safety in production and use than conventional molten salt batteries using metallic sodium as a negative electrode. Further, the molten salt battery of the present embodiment has longer charge/discharge cycle life than conventional molten salt batteries using metallic sodium as the negative electrode since dendrites are hardly produced in the negative electrode 1 when charging and discharging is repeated, and degradation of the negative electrode 1 and the separator 3 is inhibited.

In the present embodiment, an example in which graphite is used as the carbon material used for the negative electrode active material 12 is shown, but the molten salt battery is not limited to this example and may use other carbon materials. For example, as the carbon material, a substance composed of bunched carbon fibers having a structure in which graphite layers are curved and formed into a cylinder may be used. When absorbing sodium ions, in case of graphite, sodium ions are inserted between graphite layers, whereas in case of carbon fibers, sodium ions are absorbed within the fibers. Therefore, the negative electrode 1 using carbon fibers has smaller changes in size at the time of charging than the negative electrode 1 using graphite. Accordingly, the life of the molten salt battery is lengthened since breakage due to the expansion and shrinkage of the negative electrode 1 decreases. Further, the molten salt battery can be improved in energy density by decreasing the internal space for the expansion and shrinkage of the negative electrode 1.

Further, in the present embodiment, an example of the molten salt battery is shown, in which a molten salt composed of a FSA- or TFSA-based anion and a cation of sodium and/or potassium is used as the electrolyte and which operates at 80°C or more, but the molten salt battery of the present invention may have another configuration using another molten salt as the electrolyte. The molten salt battery using another molten salt as the electrolyte operates at a temperature, at which the molten salt is actually molten, or more.

### (Embodiment 2)

In Embodiment 2, a configuration in which hard carbon is used as a main component of the negative electrode active material 12 of the negative electrode 1 will be described. A charge/discharge experiment was performed in order to verify the performance of the negative electrode 1 in which hard carbon is used as a main component of the negative electrode active material 12. The negative electrode active material 12 of the negative electrode 1, used in the experiment was prepared by kneading 90% by mass of hard carbon and 10% by mass of PVDF. The battery used in the experiment was a half cell including a reference electrode configured by using metallic sodium, and the negative electrode 1. The electrolyte was a molten salt of a mixture of NaFSA in which a sodium ion is used as a cation and FSA is used as an anion and KFSA in which a potassium ion is used as a cation and FSA is used as an anion. The temperature of the battery was set at 80°C, and charging and discharging was carried out at a constant current of 25 mA/g, which is the current per unit mass of hard carbon in the negative electrode 1.

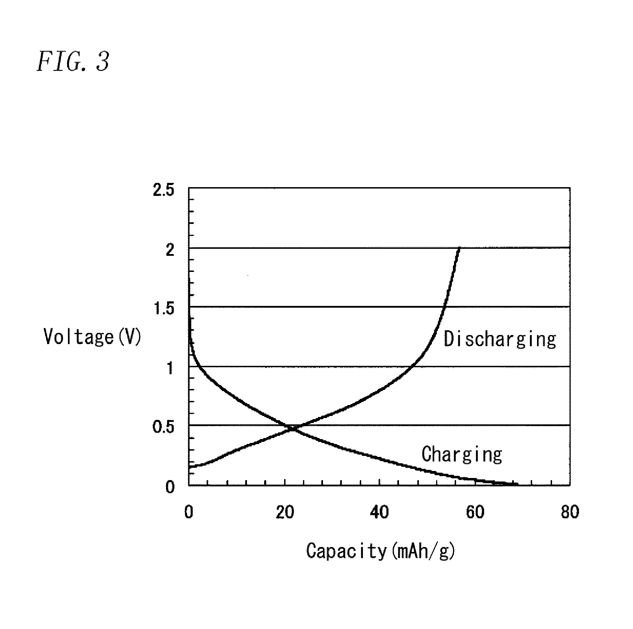

FIG. 3 is a characteristic chart showing the results of the charge/discharge experiment using the negative electrode 1 in which hard carbon is used as a main component of the negative electrode active material 12. In FIG. 3, the horizontal axis indicates the capacity of the battery at the charging or discharging and the vertical axis indicates the voltage generated between the negative electrode 1 and the reference electrode at the charging or discharging. The capacity is represented by the value per unit mass of the hard carbon in the negative electrode 1. In FIG. 3, the curve directed downward indicates changes in the capacity and the voltage during charging, and the curve directed upward indicates changes in the capacity and the voltage during discharging. It is apparent from FIG. 3 that the charging and discharging are practically performed up to around 60 mAh/g. That is, it became apparent from the experiment that the negative electrode 1, in which hard carbon is used as a main component of the negative electrode active material 12, can absorb and releases sodium ions contained in the molten salt of an electrolyte, and serves as a negative electrode of the molten salt battery. Therefore, the molten salt battery including the negative electrode 1 is practically capable of charging and discharging.

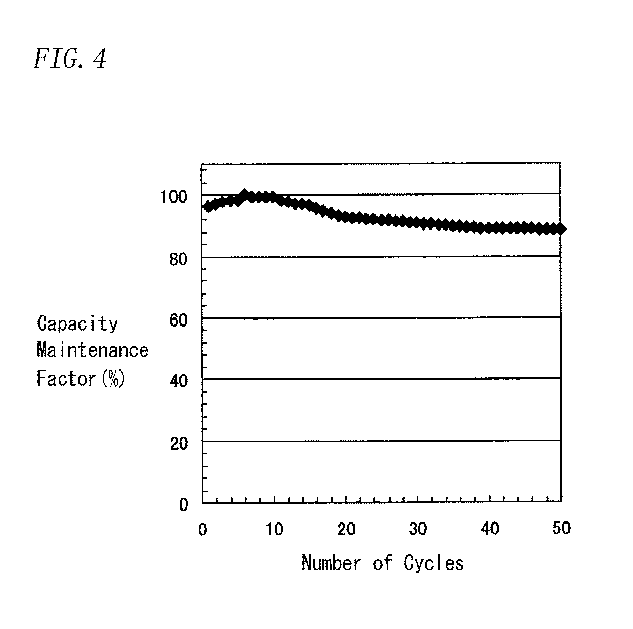

Next, an experiment for investigating the cycle life of the negative electrode 1 was carried out. In the experiment, charging and discharging was repeated by using the same half cell, and the capacity maintenance factor of discharge and Coulombic efficiency were measured for every cycle of charging and discharging. The capacity maintenance factor was determined by dividing the discharge capacity at each cycle by the maximum discharge capacity in all cycles. The Coulombic efficiency was determined by dividing the discharge capacity at each cycle by the charge capacity. FIG. 4 is a characteristic chart showing changes in the capacity maintenance factor obtained in the experiment. The horizontal axis of FIG. 4 indicates the number of cycles and the vertical axis indicates the capacity maintenance factor at each cycle. In the experiment, the discharge capacity reached its maximum at the 6th charge/discharge cycle, and the ratio of the discharge capacity at each cycle to the maximum value was regarded as the capacity maintenance factor. The capacity maintenance factor was decreased as the charging and discharging was repeated, but a high capacity maintenance factor of 80% or more was maintained in many charge/discharge cycles up to 50th cycle.

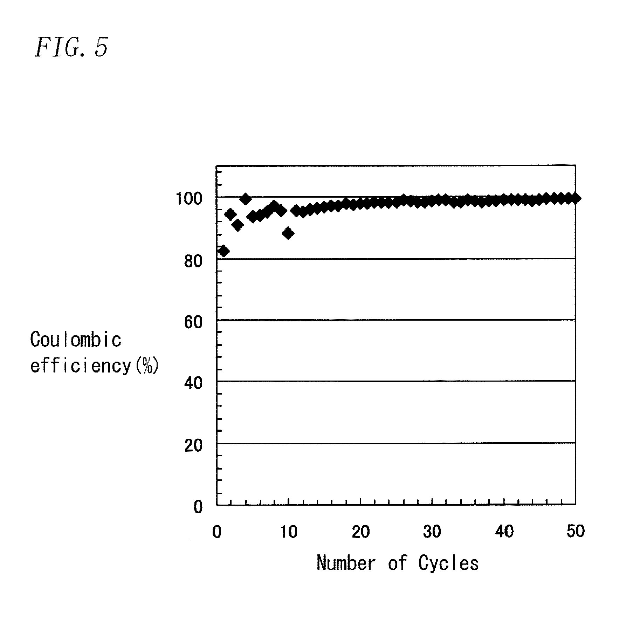

FIG. 5 is a characteristic chart showing changes in Coulombic efficiency obtained in the experiment. The horizontal axis of FIG. 5 indicates the number of cycles of charging and discharging and the vertical axis indicates the Coulombic efficiency at each cycle. Although the Coulombic efficiency was below 90% in the first and 10th charge/discharge cycles, in other cycles, a high Coulombic efficiency of 90% or more was maintained in many charge/discharge cycles up to 50th cycle. It became apparent from the experiment of cycle life that the negative electrode 1, in which the negative electrode active material 12 is predominantly composed of hard carbon, serves stably as a negative electrode of the molten salt battery even when charging and discharging is repeated many times, and has a long cycle life.

Next, the molten salt battery of the present embodiment will be described. The configuration of the molten salt battery of Embodiment 2 is the same as in Embodiment 1 except for the negative electrode 1. Therefore, descriptions of parts other than the negative electrode 1 will be omitted. The negative electrode 1 is formed by applying a negative electrode active material 12, which is a mixture of hard carbon and a binder such as PTFE or PVDF, onto a rectangular plate-shaped negative electrode current collector 11 made of aluminum or nickel. Hard carbon is a carbon material having a irregular structure. The blend ratio of hard carbon to the binder is a ratio at which the negative electrode active material 12 is predominantly composed of hard carbon, such as 9 : 1. The thickness of the negative electrode active material 12 is 50 µm to 1 mm similarly to Embodiment 1. The negative electrode active material 12 is surface-treated for imparting hydrophilicity thereto as with Embodiment 1.

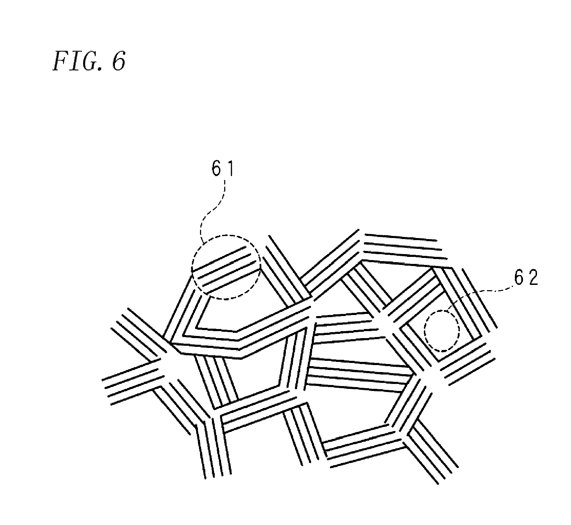

As described above, also in the present embodiment, the negative electrode 1 can absorb sodium ions contained in the molten salt of an electrolyte, and the molten salt battery including the negative electrode 1 is practically capable of charging and discharging, as with Embodiment 1. FIG. 6 is a schematic view showing an example of a structure of hard carbon. Hard carbon has a structure in which small sized laminar structure portions, respectively having a structure of plural graphite layers laminated, are irregularly compacted. In FIG. 6, one of laminar structure portions 61 is enclosed by a broken line. Since many of the laminar structure portions 61 are irregularly compacted, many nano-sized pores are formed in the hard carbon. In FIG. 6, one of pores 62 is enclosed by a broken line. When sodium ions are absorbed in the negative electrode active material 12 in charging the molten salt battery, the sodium ions are inserted between the graphite layers of the laminar structure portions 61 at the initial stage of charging, and since then, a cluster of sodium ions is formed within each of the pores 62.

Since the molten salt battery operates at a high temperature of 80°C or more, a probability of occurrence of self discharge, in which sodium ions absorbed in the negative electrode active material 12 by charging are spontaneously released from the negative electrode active material 12 with the lapse of time, increases compared with a battery such as a lithium ion battery which operates at room temperature. When the self discharge occurs, the capacity of the molten salt battery is reduced. Thus, in the present invention, a transition metal such as iron, nickel or the like is added to the negative electrode active material 12. For example, the negative electrode active material 12 is impregnated with a paste containing a transition metal powder and components other than the transition metal contained in the paste are baked off, and thereby the transition metal is added to the negative electrode active material 12. Further, for example, the transition metal is added to the negative electrode active material 12 by depositing the transition metal onto the surface of the negative electrode active material 12 by sputtering.

The transition metals such as iron and nickel have high affinity for sodium, and this interferes with spontaneous release of the sodium ions from the negative electrode active material 12. Therefore, when the transition metal such as iron or nickel is added to the negative electrode active material 12, the occurrence of self discharge at the negative electrode 1 is reduced, and reduction in the capacity of the molten salt battery is suppressed. Moreover, the negative electrode active material 12 of the negative electrode 1 is surface-treated for improving the affinity for the molten salt, as with Embodiment 1. The surface-treated negative electrode active material 12 becomes easy to absorb sodium ions, and in the molten salt battery including the negative electrode 1, adequate charging becomes possible.

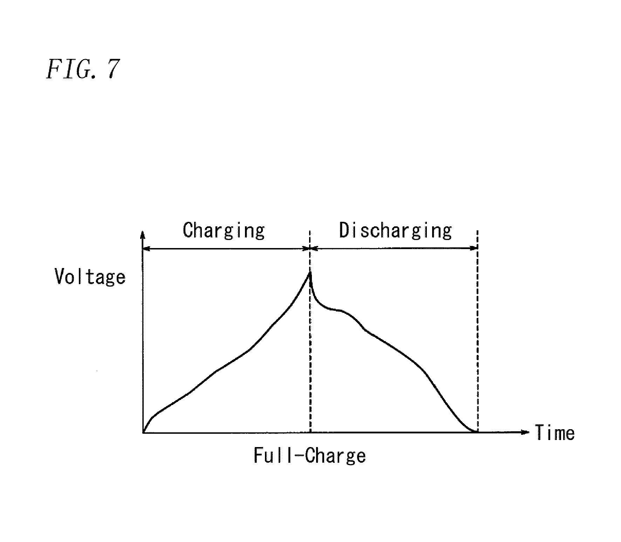

FIG. 7 is a schematic characteristic chart showing a voltage characteristic at the charging and discharging of the molten salt battery of Embodiment 2, and a voltage characteristic in the case where the molten salt battery is charged from a non-charged state and the battery is discharged from the fully charged time point is shown. In FIG. 7, the horizontal axis indicates the time elapsed from the start of charging and the vertical axis indicates the voltage generated between the positive electrode 2 and the negative electrode 1 at each time point. In charging, the voltage monotonically increases with time, and in discharging, it monotonically decreases with time. This voltage characteristic shows that the voltage monotonically changes in accordance with the charge capacity in charging and remaining capacity in discharging. Therefore, in the molten salt battery of the present embodiment, it becomes possible to determine the charge capacity in charging and the remaining capacity in discharging by measuring the voltage between the positive electrode 2 and the negative electrode 1.

Since the molten salt battery of the present embodiment includes the negative electrode 1 predominantly composed of hard carbon, it has higher safety in production and use than conventional molten salt batteries using metallic sodium as a negative electrode. Further, as with Embodiment 1, the molten salt battery of the present embodiment has longer charge/discharge cycle life than conventional molten salt batteries using metallic sodium as a negative electrode. Further, when sodium ions are absorbed in the negative electrode active material 12 in charging the molten salt battery, the sodium ions penetrate into each of the pores 62 in addition to the space between the graphite layers of the laminar structure portions 61, and therefore the negative electrode active material 12 can absorb more sodium ions. Therefore, the molten salt battery of the present embodiment has a larger capacity than the molten salt battery using graphite in the negative electrode 1. For example, while the theoretical capacity of the molten salt battery using graphite in the negative electrode 1 is 200 mAh/g, the theoretical capacity of the molten salt battery using hard carbon in the negative electrode 1 is 700 mAh/g. Moreover, in the present embodiment, when the sodium ions enter or exit the negative electrode active material 12, since they enter or exit the pores 62 of hard carbon, changes in volume of hard carbon associated with entering or exiting of the sodium ions are small. Therefore, the negative electrode 1 having the negative electrode active material 12 predominantly composed of hard carbon has smaller changes in size at the time of charging and discharging compared with the negative electrode using graphite. Accordingly, the life of the molten salt battery is lengthened since breakage due to the expansion and shrinkage of the negative electrode 1 decreases. Further, the molten salt battery can be improved in energy density by decreasing the internal space for the expansion and shrinkage of the negative electrode 1.

In the above embodiments 1 and 2, an embodiment using a sodium compound as the positive electrode active material is shown, but the molten salt battery of the present invention is not limited to the embodiment and may have a configuration in which another metal or metal compound is used as the positive electrode active material. Further, in the above embodiments 1 and 2, an embodiment using an electrode predominantly composed of carbon as the negative electrode is shown, but the molten salt battery of the present invention is not limited to the embodiment, and may have a configuration in which an electrode predominantly composed of carbon is used as a positive electrode. For example, the electrode predominantly composed of carbon can be used as the positive electrode depending on the material of the other electrode. The embodiments disclosed herein are all exemplifications and are not to be construed to limit the scope of the invention. The scope of the invention is defined by the appended claims rather than the preceding description, and all changes that fall within the scope of the claims and the scope equivalent thereto are therefore intended to be embraced by the present invention.

### REFERENCE SIGNS LIST

1: negative electrode
11: negative electrode current collector
12: negative electrode active material
2: positive electrode
3: separator
41: battery case
42: lid section

## Claims

1. A molten salt battery using a molten salt as an electrolyte, comprising:
an electrode predominantly composed of carbon, the electrode being surface-treated for improving an affinity for the molten salt.

2. The molten salt battery according to claim 1, wherein a hydrophilic resin is applied onto a surface of the electrode as a surface treatment.

3. The molten salt battery according to claim 1, wherein a surface of the electrode is irradiated with an electron beam as a surface treatment.

4. The molten salt battery according to any one of claims 1 to 3, wherein carbon as a main component of the electrode is hard carbon.

5. The molten salt battery according to claim 4, wherein a transition metal is added to the electrode.
